# FASCICULE DE BREVET EUROPEEN

(11) **EP 1 023 549 B1**
(45) Date de publication et mention de la délivrance du brevet: **12.05.2004**
(21) Numéro de dépôt: 98943948.4
(22) Date de dépôt: 09.09.1998
(51) Int. Cl.: F16J 15/12

(54) **JOINT STATIQUE D'ETANCHEITE**
STATISCHE DICHTUNG
STATIC SEALING JOINT

(30) Priorité: 09.09.1997 FR 9711420
(43) Date de publication de la demande: 02.08.2000
(73) Titulaire: Federal Mogul Sealing Systems, 69800 Saint Priest (FR)
(72) Inventeur: POQUET, Jean-Paul, F-69450 Saint Cyr au Mont d'Or (FR); COMBET, Alexis, F-69003 Lyon (FR)
(74) Mandataire: Maureau, Philippe
(86) Numéro de dépôt international: PCT/FR1998/001924
(87) Numéro de publication internationale: WO 1999/013248

(56) Documents cités:
- EP-A- 0 259 794
- EP-A- 0 281 228
- EP-A- 0 505 693
- DE-C- 4 402 399
- US-A- 3 837 657
- US-A- 4 625 979
- US-A- 4 852 893
- US-A- 5 267 740

## Description

La présente invention a pour objet un joint statique d'étanchéité, destiné notamment à être utilisé dans le domaine de l'automobile et à réaliser une étanchéité entre une partie immobile et un couvercle, par exemple de bac à huile, de culasse, de pompe à huile, de pompe à eau, ou encore à réaliser l'étanchéité au niveau d'un carter de distribution, ou à former un joint de collecteur d'admission.

Il existe à ce jour différents types de joints statiques.

Un premier joint est réalisé en élastomère pur. Un tel joint présente l'avantage d'être bon marché, et de posséder des propriétés d'amortissement. Toutefois, ce joint ne possède pas de tenue mécanique avant montage, et les entre-axes des ouvertures de passage de vis ne sont pas maîtrisés, ce qui complique la manipulation et le montage. En outre, un tel joint ne bénéficie pas de limites de compression, et n'assure pas de cote fixe entre les éléments à étancher, sinon à l'aide d'entretoises rapportées, ce qui peut se traduire par des risques d'éclatement en position serrée.

Un second joint est réalisé à partir d'une pâte silicone déposée directement sur le récipient à étancher. Ce type de joint est utilisé notamment pour les couvercles de culasse. Dans ce cas, le cordon de pâte est déposé par un robot sur une chaîne de montage. L'avantage d'un tel joint est qu'il est bon marché, ses inconvénients essentiels étant qu'il est détruit lorsque le couvercle auquel il est associé est enlevé, et qu'il est difficile de redéposer un nouveau joint similaire.

Un autre type de joint est constitué par un support carton (fibres et élastomère) fabriqué par des techniques papetières. De tels joints sont utilisés fréquemment pour réaliser l'étanchéité de bacs à huile, et quelquefois de couvercles de culasse. Un tel joint présente l'avantage d'être bon marché, mais de procurer une étanchéité très moyenne.

Un autre type de joint est un joint de type métal revêtu. Il s'agit d'une bande de matériau métallique, tel qu'un acier inoxydable, d'une épaisseur de l'ordre de 0,2 à 0,4 mm, qui possède au moins une nervure continue pour assurer une contrainte assurant l'étanchéité. Pour protéger l'acier, cette bande métallique est revêtue d'une couche de quelques microns d'élastomère, tels qu'un nitrile ou un élastomère de type fluoré formant une couche d'étanchéité de surface.

Un tel joint est d'un prix de revient raisonnable, offre de bonnes qualités d'étanchéité, mais nécessite, pour sa réalisation, des moyens de mise en oeuvre importants (chaîne d'enduction).

Le document US-A-4 625 979 concerne un joint de culasse comportant une âme constituée de plusieurs couches laminées, par exemple,un noyau métallique revêtu sur ses deux faces par deux couches fibreuses, à base de fibres de verre ou d'amiante, agglomérées par un polymère. Les ouvertures de passage de fluides sont entourées par des cordons d'étanchéité en silicone de hauteur constante, déposés par sérigraphie et bordés chacun, de part et d'autre, par une nervure plus rigide, destinée à limiter le fluage du cordon silicone en période de serrage.

Le document DE 44 02 399 concerne un joint de culasse comportant une âme métallique sur laquelle sont déposées des garnitures d'étanchéité en élastomère, comportant chacune un réseau de pointes et de creux en forme de pyramides. Lors du serrage et en fonction de l'intensité du serrage, l'élastomère situé au niveau des pointes peut fluer dans les creux. Le réseau ainsi réalisé forme un labyrinthe permettant d'assurer une étanchéité aux fluides, même en cas de détérioration locale du joint.

Le but de l'invention est de fournir un procédé de fabrication d'un joint statique d'étanchéité ainsi qu'un joint d'étanchéité, de prix de revient modéré, facile à mettre en oeuvre, et susceptible de convenir pour de très nombreuses applications.

A cet effet, l'invention propose le procédé tel que défini par la revendication 1.

L'invention concerne également un joint tel que defini par la revendication 3.

Suivant une caractéristique de l'invention, l'acier doux constitutif de l'âme est un acier zingué, et l'épaisseur de l'âme est de l'ordre de 0,2 mm. L'élastomère peut appartenir à la famille des silicones.

L'invention fournit donc un joint dans lequel les parties d'étanchéité en élastomère sont réalisées en une seule matière et obtenues en une seule opération, lors de la fabrication du joint, avec modulation de l'épaisseur pour garantir une pression de contact adaptée à la déformation éventuelle des pièces à étancher. Compte tenu de la présence des composants d'adhérence, la résistance de l'élastomère au fluage latéral sous contrainte est excellente et l'ensemble peut résister à des pressions de 80 MPa.

Suivant une autre caractéristique, l'épaisseur d'élastomère est variable de 0 à 0,3 mm par face.

Le filet continu ou nervure peut être ou non présent en certains emplacements du joint, ou alors il est possible de disposer en d'autres emplacements de plusieurs filets parallèles pour créer plusieurs barrières d'étanchéité.

Suivant une autre caractéristique de l'invention, au moins une couche d'élastomère présente, à proximité d'au moins l'un de ses bords, au moins une surépaisseur localisée, afin de réaliser, lors du serrage, une étanchéité latérale.

Suivant une autre possibilité, l'âme métallique présente des crevés formant butées de serrage et améliorant l'accrochage des couches d'élastomère.

De toute façon, l'invention sera bien comprise à l'aide de la description qui suit, en référence au dessin schématique annexé, représentant, à titre d'exemple non limitatif, une forme d'exécution de ce joint :

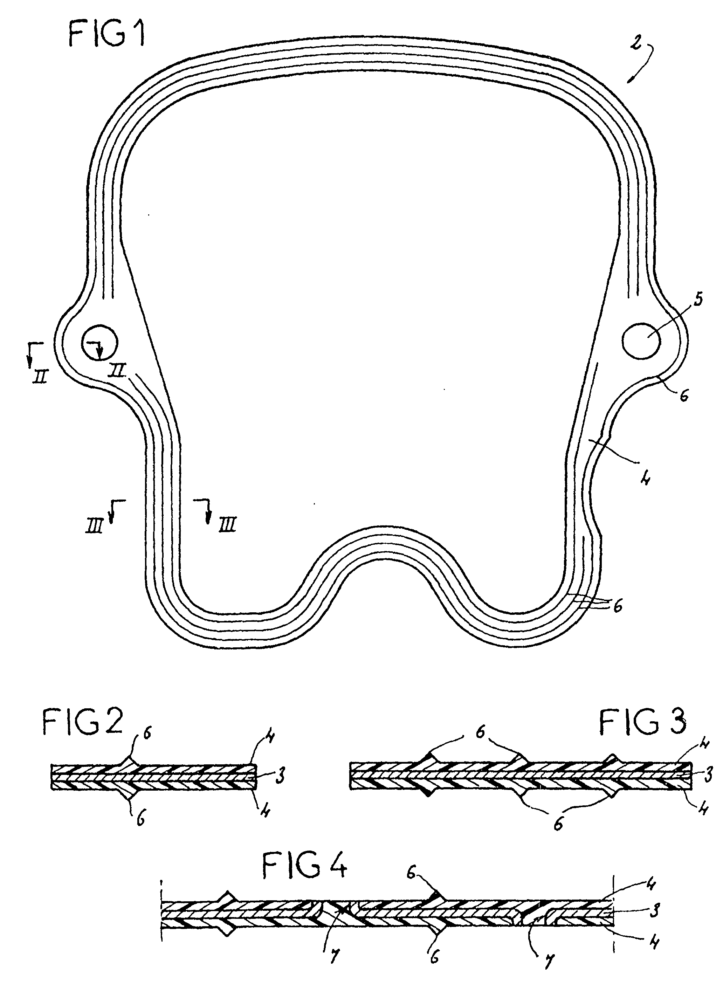

Figure 1 est une vue de dessus d'un joint de couvre-culasse ;
Figures 2 et 3 sont deux vues en coupe transversale et à échelle agrandie selon les lignes 11-11 et 111-111 de figure 1 ;
Figure 4 est une vue en coupe transversale et à échelle agrandie d'un autre joint.

Le joint 2 représenté au dessin est un joint de couvre-culasse de moteur thermique. Ce joint comprend une âme 3 constituée par une bande plate métallique en acier zingué. Cette bande est revêtue, sur ses deux faces, de deux couches d'élastomère 4, tel qu'un silicone.

L'épaisseur de l'âme est de l'ordre de 0,2 mm. L'épaisseur de chaque couche d'élastomère varie d'environ 0 à 0,3 mm. Le joint représenté au dessin présente deux trous 5 pour le passage des vis de serrage. L'épaisseur des deux couches 4 d'élastomère varie sur le pourtour du joint, cette épaisseur étant minimale dans les zones de serrage, c'est-à-dire au niveau des trous 5, et étant maximale dans les zones d'extrémité, c'est-à-dire les zones décalées de 90" par rapport aux trous 5.

C'est ainsi qu'au niveau des trous 5, l'épaisseur du joint est à peine supérieure à l'épaisseur de la bande métallique 3, tandis que, dans les zones de plus forte épaisseur décalées de 90°, elle peut être de l'ordre de 0,35 à 0,40mm, compte tenu d'une épaisseur plus importante des couches 4 d'élastomère.

Suivant une autre caractéristique de l'invention, chaque couche de polymère 4 comporte des filets longitudinaux 6, de section générale triangulaire, d'une hauteur variable de l'ordre de 0,1 à 0,5 mm. Ces filets 6 sont localisés en tenant compte des contraintes exercées sur le joint pour assurer une étanchéité optimale. C'est ainsi que dans les zones des trous de fixation 5, il n'existe qu'un seul filet, alors que sur le reste de la longueur du joint il existe trois filets parallèles constituant trois barrières d'étanchéité.

Il est également possible de faire varier la hauteur des filets 6 pour tenir compte localement d'impératifs d'étanchéité.

Les deux couches 4 d'élastomère sont déposées sur l'âme 3, opération au cours de laquelle est obtenue leur fixation sur cette âme grâce à des composants d'adhérence. L'ensemble est ensuite placé dans un moule chauffé, dans lequel sont réalisées tout d'abord la conformation des deux couches d'élastomère puis leur vulcanisation. Il est également possible d'améliorer cette fixation par un accrochage mécanique, à l'aide de crevés 7 ménagés dans l'âme 3, de part et d'autre de celle-ci, ces crevés réalisant, outre l'accrochage mécanique des couches de polymère, la fonction de butée de serrage.

Comme il ressort de ce qui précède, l'invention apporte une grande amélioration à la technique existante en fournissant un joint de structure simple obtenu en une seule opération, comportant une âme réalisée en un matériau bon marché assurant une bonne tenue mécanique au joint, et deux couches d'élastomère disposées de part et d'autre de l'âme assurant, pour leur part, la fonction d'étanchéité, avec possibilité de modulation des épaisseurs de ces couches pour tenir compte des contraintes liées à l'environnement du joint.

## Revendications

1. Procédé de fabrication d'un joint statique d'étanchéité, **caractérisé en ce qu'**il comprend les étapes consistant à :
- déposer à froid sur chacune des faces d'une âme plate métallique (3), réalisée en acier doux, un composant d'adhérence,
- déposer à froid sur chacune des faces de l'âme (3) une couche d'élastomère (4),
- placer l'âme plate métallique (3) revêtue d'élastomère, dans un moule chauffé de façon à réaliser la mise en forme de chaque couche d'élastomère, dont l'épaisseur varie en fonction de la forme des pièces entre lesquelles le joint est destiné à être monté, et des impératifs d'étanchéité, et de façon à former sur chaque couche d'élastomère et le long du pourtour du joint, au moins un filet continu ou nervure (6) de section de forme générale triangulaire, de hauteur variant entre 0,05 et 0,5 mm,
- et à vulcaniser à chaud l'élastomère.

2. Procédé de fabrication d'un joint statique selon la revendication 1, **caractérisé en ce que** l'âme plate métallique (3) recouverte d'élastomère est placée dans un moule de façon à former, en outre, une surépaisseur d'élastomère à proximité de l'un des bords de l'âme plate métallique (3).

3. Joint statique d'étanchéité **caractérisé en ce qu'**il comprend une âme plate métallique (3) réalisée en acier doux, dont chacune des faces est revêtue d'une couche (4) d'élastomère liée par des composants permettant son adhérence sur le métal et dont l'épaisseur varie en fonction de la forme des pièces entre lesquelles le joint est destiné à être monté et des impératifs d'étanchéité en chaque point de la surface du joint, chaque couche d'élastomère (4) comportant, le long du pourtour du joint au moins un filet continu ou nervure (6), de section de forme générale triangulaire, de hauteur variant entre 0,05 et 0,5 mm.

4. Joint statique d'étanchéité selon la revendication 3, **caractérisé en ce qu'**au moins une couche d'élastomère (4) présente, à proximité d'au moins l'un de ses bords, au moins une surépaisseur localisée, afin de réaliser, lors du serrage, une étanchéité latérale.

5. Joint statique d'étanchéité selon la revendication 3 ou la revendication 4, **caractérisé en ce que** l'acier doux constitutif de l'âme (3) est un acier zingué.

6. Joint statique d'étanchéité selon l'une des revendications 3 à 5, **caractérisé en ce que** l'épaisseur de l'âme (3) est de l'ordre de 0,2mm.

7. Joint statique d'étanchéité selon l'une des revendications 3 à 6, **caractérisé en ce que** l'épaisseur de chaque couche d'élastomère est comprise entre 0 et 0,3mm.

8. Joint statique d'étanchéité selon l'une des revendications 3 à 7, **caractérisé en ce que** l'épaisseur de chaque couche d'élastomère varie sur le pourtour du joint, étant minimale dans les zones de serrage, et étant maximale dans les zones éloignées desdites zones de serrage.

9. Joint statique d'étanchéité selon l'une des revendications 3 à 8, **caractérisé en ce que** l'âme métallique (3) présente des crevés (7) formant butée de serrage et améliorant l'accrochage des couches (4) d'élastomère.

## Claims

1. Method of producing a static gasket, **characterised in that** it comprises the steps consisting in:
- cold-depositing on each of the faces of a flat metal core (3) made of soft steel an adhesive compound,
- cold-depositing on each of the faces of the core (3) an elastomer layer (4),
- placing the elastomer-coated flat metal core (3) in a heated mould so as to shape each elastomer layer, the thickness of which varies according to the shape of the parts between which the gasket is intended to be mounted, and the sealing requirements, and so as to form on each elastomer layer and along the circumference of the seal at least one continuous ridge or rib (6) of generally triangular-shaped section with a height ranging from 0.05 to 0.5 mm,
- and in hot-curing the elastomer.

2. Method of producing a static gasket according to Claim 1, **characterised in that** the elastomer-covered flat metal core (3) is placed in a mould so as to form, in addition, an increased thickness of elastomer close to one of the edges of the flat metal core (3).

3. Static gasket, **characterised in that** it comprises a flat metal core (3) made of soft steel, each of the faces of which is coated with an elastomer layer (4) bonded by compounds enabling its adherence to the metal and the thickness of which varies according to the shape of the parts between which the gasket is intended to be mounted and the sealing requirements at each point on the surface of the gasket, each elastomer layer (4) having, along the circumference of the gasket, at least one continuous ridge or rib (6) of generally triangular-shaped section with a height ranging from 0.05 to 0.5 mm.

4. Static gasket according to Claim 3, **characterised in that** at least one elastomer layer (4) has, close to at least one of its edges, at least one localised increased thickness in order to produce lateral sealing upon tightening.

5. Static gasket according to Claim 3 or Claim 4, **characterised in that** the soft steel of which the core (3) is composed is a galvanised steel.

6. Static gasket according to one of Claims 3 to 5, **characterised in that** the thickness of the core (3) is of the order of 0.2 mm.

7. Static gasket according to one of Claims 3 to 6, **characterised in that** the thickness of each elastomer layer is between 0 and 0.3 mm.

8. Static gasket according to one of Claims 3 to 7, **characterised in that** the thickness of each elastomer layer varies over the circumference of the gasket, being at its smallest in the tightening regions and being at its greatest in the regions remote from the said tightening regions.

9. Static gasket according to one of Claims 3 to 8, **characterised in that** the metal core (3) has perforations (7) forming tightening stops and improving the attachment of the elastomer layers (4).

## Patentansprüche

1. Verfahren zur Herstellung einer statischen Dichtung, **dadurch gekennzeichnet, dass** es die folgenden Schritte umfasst:
- auf jede der Flächen eines flachen Metall-Kerns (3), der aus kohlenstoffarmem Stahl hergestellt ist, eine Haftsubstanz kalt aufbringen,
- auf jede der Flächen des Kerns (3) eine Elastomerschicht (4) kalt aufbringen,
- den mit Elastomer bedeckten flachen Metallkern (3) in einer geheizten Form so anordnen, dass jede Elastomerschicht, deren Dicke je nach der Form der Teile, zwischen welche die Dichtung montiert werden soll, und je nach den Dichtigkeitsanforderungen variiert, in Form gebracht wird, und so, dass auf jeder Elastomerschicht und entlang dem Außenrand der Dichtung mindestens ein kontinuierlicher Steg oder eine kontinuierliche Rippe (6) mit einem allgemein dreieckförmigen Querschnitt gebildet wird, dessen beziehungsweise deren Höhe zwischen 0,05 und 0,5 mm variiert,
- und das Elastomer heiß vulkanisieren.

2. Verfahren zur Herstellung einer statischen Dichtung nach Anspruch 1, **dadurch gekennzeichnet, dass** der flache, elastomerbedeckte Metallkern (3) in einer Form so angeordnet wird, dass außerdem eine Überdicke des Elastomers nahe bei einem der Ränder des flachen Metallkerns (3) gebildet wird.

3. Statische Dichtung, **dadurch gekennzeichnet, dass** sie einen flachen Metallkern (3) umfasst, der aus kohlenstoffarmem Stahl hergestellt ist, bei dem jede Fläche mit einer Elastomerschicht (4) bedeckt ist, welche mit Substanzen verbunden ist, die ihre Haftung auf dem Metall bewirken, und deren Dicke je nach der Form der Teile, zwischen welche die Dichtung montiert werden soll, und je nach den Dichtigkeitsanforderungen an jedem Punkt der Dichtungsfläche variiert, wobei jede Elastomerschicht (4) entlang dem Außenrand der Dichtung mindestens einen kontinuierlichen Steg oder eine kontinuierliche Rippe (6) mit allgemein dreieckförmigem Querschnitt aufweist, dessen beziehungsweise deren Höhe zwischen 0,05 und 0,5 mm variiert.

4. Statische Dichtung nach Anspruch 3, **dadurch gekennzeichnet, dass** mindestens eine Elastomerschicht (4) nahe bei mindestens einem ihrer Ränder mindestens eine Überdicke aufweist, die so angeordnet ist, dass beim Zusammenpressen eine seitliche Dichtigkeit entsteht.

5. Statische Dichtung nach Anspruch 3 oder Anspruch 4, **dadurch gekennzeichnet, dass** der kohlenstoffarme Stahl, aus dem der Kern (3) besteht, ein verzinkter Stahl ist.

6. Statische Dichtung nach einem der Ansprüche 3 bis 5, **dadurch gekennzeichnet, dass** die Dicke des Kerns (3) in der Größenordnung von 0,2 mm liegt.

7. Statische Dichtung nach einem der Ansprüche 3 bis 6, **dadurch gekennzeichnet, dass** die Dicke jeder Elastomerschicht zwischen 0 und 0,3 mm liegt.

8. Statische Dichtung nach einem der Ansprüche 3 bis 7, **dadurch gekennzeichnet, dass** die Dicke jeder Elastomerschicht am Außenrand der Dichtung variiert, wobei sie in den Bereichen des Zusammenpressens am geringsten und in den Bereichen am größten ist, die von den Bereichen des Zusammenpressens entfernt liegen.

9. Statische Dichtung nach einem der Ansprüche 3 bis 8, **dadurch gekennzeichnet, dass** der Metallkern (3) Durchbrüche (7) aufweist, die einen Anschlag für das Zusammenpressen bilden und das Verankern der Schichten (4) verbessern.
